# EUROPÄISCHE PATENTSCHRIFT

(11) **EP 0 713 368 B1**
(45) Veröffentlichungstag und Bekanntmachung des Hinweises auf die Patenterteilung: **18.03.1998**
(21) Anmeldenummer: 94925444.5
(22) Anmeldetag: 10.08.1994
(51) Int. Cl.: A23L 2/52, A23L 1/302, A23L 1/304, A23L 2/76

(54) **LAGERSTABILE ANGEREICHERTE FLÜSSIGE NAHRUNGSMITTEL UND VERFAHREN ZU IHRER HERSTELLUNG**
STORAGE STABLE, ENRICHED LIQUID FOODSTUFF AND PROCESS FOR PRODUCING THE SAME
ALIMENTS LIQUIDES ENRICHIS STABLES AU STOCKAGE ET LEUR PROCEDE DE PRODUCTION

(30) Priorität: 14.08.1993 DE 4327350
(43) Veröffentlichungstag der Anmeldung: 29.05.1996
(73) Patentinhaber: Eckes Aktiengesellschaft, D-55268 Nieder-Olm (DE)
(72) Erfinder: WIESENBERGER, Alfred, D-65191 Wiesbaden (DE); KOLB, Erich, D-55268 Nieder-Olm (DE); SIMSON, Ingrid, D-55122 Mainz (DE)
(74) Vertreter: Werner, Hans-Karsten, Dr.Dipl.-Chem.
(86) Internationale Anmeldenummer: EP9402652
(87) Internationale Veröffentlichungsnummer: WO9505093

(56) Entgegenhaltungen:
- EP-A- 0 397 232
- EP-A- 0 419 885
- EP-A- 0 440 586
- WO-A-91/17670

## Beschreibung

Gegenstand der vorliegenden Erfindung sind lagerstabile mit antioxidativ wirksamen Nährstoffen und Vitaminen angereicherte flüssige Nahrungsmittel, enthaltend zugesetzte Mengen an Provitamin A und/oder Vitamin A, C und E sowie gegebenenfalls Vitamine der B-Gruppe, Mengen- und Spurenelemente, Bioflavonoide, Carotinoide, essentielle Fettsäuren, Ballaststoffe und/oder Selen sowie Verfahren zur Herstellung dieser Getränke.

Nach Herz-Kreislauferkrankungen sind maligne Tumore auch in anderen westlichen Industrieländern die häufigste Todesursache. Es ist zu erwarten, daß die Zahl der Tumorerkrankungen in den nächsten Jahren zusätzlich aufgrund einer zunehmenden Lebenserwartung der Bevölkerung ansteigen wird, da mit steigendem Alter auch das Risiko wächst, an Krebs zu erkranken. Der Anstieg an Krebserkrankungen und die nur begrenzten Fortschritte in der Krebstherapie zeigen die Bedeutung der Intensivierung der Tumorprophylaxe (Ernährungsbericht 1992, Deutsche Gesellschaft für Ernährung).

In den USA sind Krebserkrankungen die zweithäufigste Todesursache. Sie verursachen schätzungsweise etwa 10 % der Gesamtkrankheitskosten. Über eine Million Neuerkrankungen werden jedes Jahr festgestellt. Nach Literaturangaben (VERIS: Die Bedeutung von Antioxidantien bei der Verhütung und Behandlung von Krebserkrankungen; April 1992) werden ungefähr 30 % aller Einwohner der USA an Krebs erkranken.

Viele epidemiologische Untersuchungen an ausgewählten Bevölkerungsgruppen sowie tierexperimentelle Studien der letzten Jahre berichten über den Zusammenhang zwischen der Versorgung mit bestimmten Nährstoffen und dem Risiko, an Krebs zu erkranken.

Dabei stehen die Vitamine E, C, das Provitamin A und das Spurenelement Selen im Vordergrund.

Des weiteren konnten die antikarzinogenen Schutzwirkungen der Vitamine und Provitamine sowie des Selens auch durch Untersuchungen an Zellkulturen gestützt werden. So konnten Vitamin E und Selen die Transformation normaler Mäuseembryozellen in kanzeröse Zellen verhindern, nachdem sie Strahlen oder chemischen Substanzen ausgesetzt worden waren. Interessanterweise erwies sich die Kombination aus Vitamin E und Selen als besonders wirkungsvoll; effektiver als die alleinige Verwendung von Selen oder Vitamin E (Borek et al.: Selenium and Vitamin E inhibit radiogenic and chemically induced transformation in vitro via different mechanisms; Proc. Nat. Acad. Sci., 83, 1986, 1490 - 1494). Auch konnte Vitamin C in Untersuchungen an isolierten Leukämiezellen das Wachstum verlangsamen (Watson et al.: Selenium and Vitamin A, E and C: Nutrients with cancer prevention properties; J. Am. Diet. Assoc., 86, 1986, 505 - 510).

Zusammenfassend kann festgestellt werden, daß zahlreiche Untersuchungsergebnisse darauf hinweisen, daß das Provitamin und Vitamin A, die Vitamine C und E und Selen das Auftreten bestimmter Krebsformen verringern.

Die Wirkung der vorgenannten Vitamine, des Provitamins A bzw. β- Carotins sowie des Selens als Bestandteil der Glutathion-Peroxidase beruht in erster Linie auf ihrer Eigenschaft als Antioxidantien oder "Radikalfänger". Freie Radikale sind die überaus reaktionsfreudigen Zwischenprodukte des Stoffwechsels, die eine Vielzahl von Reaktionen eingehen können, wodurch es zur Bildung neuer radikaler Verbindungen kommen kann. Dieser kumulative Effekt ist in der Lage Zellmembranen und Organzellen zu zerstören und möglicherweise auch zur Initiierung von Krebszellen beizutragen (Biesalski, H.K.: Wirksamkeit von β-Carotin bei der Prävention von Krebs, Wunsch oder Wirklichkeit? (Vita. Min. Spur., 5, Supplement I, 1990). Darüber hinaus können Carotinoide wie β-Carotin den stark reaktiven Singulettsauerstoff inaktivieren. Die Immunabwehr soll durch die erwähnten Nährstoffe erhöht werden. Die Vitamine C und E verhindern die Umwandlung des Nitrits in Nitrosamine im Magen (VERIS: Die Bedeutung von Antioxidantien bei der Verhütung und Behandlung von Krebserkrankungen; April 1992 und Mirvish et al.: Ascorbate-Nitrite Reaction: Possible means of blocking the formation of carcinogenic N-Nitroso compounds; Science, Vol. 177, 1972, 65 - 68).

Selen scheint mit einer Reihe von organischen Kanzerogenen zu interagieren. Meist zeigt Selen dabei protektive Funktionen. Es sind aber auch Untersuchungen bekannt, die einen Synergismus zwischen Selen und Kanzerogen erkennen lassen (Günster et al.: Die physiologisch-toxikologische Bedeutung des Selens; Ern.- Umschau 33, 1986, Heft 4, 116 - 120).

Auch in der Arteriosklerose-Prophylaxe sind β-Carotin und Vitamin E von Bedeutung. Wie experimentelle Studien belegen, verhindert β-Carotin frühe Veränderungen an den Gefäßwänden, die zur Verkalkung führen. Bei Populationen mit hohem Herzerkrankungsrisiko wurden niedrige Vitamin E-Spiegel festgestellt, während in Populationen mit geringem Risiko bis zu 1,5fach höhere Vitamin E-Plasma-Spiegel gefunden wurden. In den USA lassen sich fast die Hälfte der Sterbefälle auf koronare Herzerkrankungen zurückführen, von denen die Mehrheit mit Arteriosklerose verbunden ist: Zu Beginn scheint die Entstehung von Arteriosklerose in Zusammenhang mit freien Radikalreaktionen, Lipidperoxidationen und weiteren oxidativen Veränderungen des LDL zu stehen (VERIS: Antioxidantien schützen möglicherweise vor Entstehung koronarer Herzerkrankungen; Juli 1992). Epidemiologische Daten und tierexperimentelle Studien zeigen eine inverse Korrelation zwischen dem Risiko an senilem Katarakt zu erkranken und der Versorgung mit Antioxidantien wie β-Carotin und den Vitaminen C und E (Foeste, A: Welche Schutzwirkungen haben antioxidative Vitamine?; evi, Nr. 2, 1992 und Varma, S.D.: Scientific basis for medical therapy of cataracts by antioxidants; Am. J. Clin. Nutr., 53, 1991, 335 - 345 und Robertson, J.Mc. D. et al.: A possible role of vitamins C and E in cataract prevention; Am. J. Clin. Nutr., 53, 1991, 346 - 351 sowie Jacques, P.F. et al.: Epidemiologic evidence of a role for the antioxidant vitamins and carotenoids in cataract prevention; Am. J. Clin. Nutr., 53, 1991, 352 - 355).

Gesundheitschädigende Wirkungen sind bei Überdosierung des Vitamin A und des Selens bekannt. Hohe Dosen an Vitamin A können Kopfschmerzen, Hautveränderungen, Lebervergrößerungen und Skelettveränderungen hervorrufen. Besondere Vorsicht gilt für Schwangere im ersten Schwangerschaftsdrittel. Die Deutsche Gesellschaft für Ernährung (DGE 1991) empfiehlt für Erwachsene eine Zufuhr von 0,8 bis 1 mg Retinoläquivalent pro Tag.

Symptome einer chronischen Selenvergiftung werden beim Erwachsenen bereits bei einer täglichen Dosis von 800 mcg Selen beobachtet. Die angemessene Zufuhr für Erwachsene wird in den Empfehlungen für die Nährstoffzufuhr aus dem Jahre 1991 mit 20 bis 100 mcg/Tag angegeben.

Die Zufuhr von Provitamin A führt hingegen zu keinerlei Schäden wie sie für das Vitamin geschildert werden. Falls der Bedarf eines Erwachsenen an Vitamin A durch β-Carotin gedeckt werden soll, sind hierfür mindestens 6 mg/Tag erforderlich.

Vitamin E-Dosen bis zu 200 mg alpha-Tocopheroläquivalente/Tag über Wochen aufgenommen, zeigten beim Erwachsenen keine Nebenwirkungen. Nebenwirkungen des Vitamin E treten in seltenen Fällen ab 400 bis 800 mg und darüber auf, die jedoch reversibel sind. Sie äußern sich in unspezifischen Magen- und Darmbeschwerden, gelegentlich auch in Muskelschmerzen. Die DGE empfiehlt für Erwachsene 12 mg alpha-Tocopheroläquivalente/Tag.

Bei Vitamin C wird als Nebenwirkung eine abführende Wirkung bei Aufnahmen im Gramm-Bereich diskutiert. Auch wegen der Oxalsäurebildung beim Ascorbinsäureabbau sollten chronisch hochdosierte Zufuhren vermieden werden.

Als Empfehlungen für tägliche Aufnahmen der Schutzstoffe β-Carotin, Vitamin E, Vitamin C und Selen werden in der Literatur Mengen von 15 bis 20 mg β-Carotin, 200 bis 800 mg Vitamin E, 1000 mg Vitamin C und 50 bis 200 mcg Selen angegeben (Watson et al.: Selenium and Vitamins A, E and C: Nutrients with cancer prevention properties; J. Am. Diet. Assoc., 86, 1986, 505 - 510 und Esterbauer et al.: Antioxidative Vitamine und degenerative Erkrankungen; Deutsches Ärzteblatt, 87, 1990, Heft 47, A: 3735 -3741).

Es ist hier eine deutliche Bedarfserhöhung im Vergleich zu den Empfehlungen, die vor allem zur Vorbeugung von Mangelkrankheiten bzw. deren Vorstufen wie Avitaminosen bzw. Hypovitaminosen notwendig sind, zu erkennen. Mit üblichen verfügbaren, nicht angereicherten Lebensmitteln oder Getränken ist auch bei ausgewogener Ernährungsweise dieser erhöhte Bedarf nicht zu decken. Dieses Problem ist nur mit entsprechenden Präparaten und/oder entsprechenden Nährstoffanreicherungen zu lösen. Zu einer Vitaminanreicherung eignen sich besonders Fruchtsäfte bzw. Fruchtnektare (Wiesenberger, A.: Vitaminisierung von Getränken - Beitrag der Fruchtsäfte zur Vitaminversorgung; Ernährung/Nutrition, Vol. 12, Nr. 8, 1988).

Um eine Nährstoffanreicherung flüssiger Nahrungsmittel, z.B. von Getränken, Sirupen o.ä. durchzuführen ist es notwendig, die zugesetzten Nährstoffe möglichst gleichmäßig im Produkt zu verteilen. Vorzugsweise soll es sich dabei um ein Einphasen-System handeln. Sollte es bei längerer Lagerung zu einer Entmischung von flüssigen Nahrungsmitteln und Zusätzen kommen, sollte der Verbraucher in der Lage sein, durch kurzes Schütteln die gleichmäßige Verteilung wieder herzustellen.

Fettlösliche Vitamine oder Provitamine, z.B. Vitamin E und β- Carotin werden bereits seit vielen Jahren in verkapselter Form angeboten. Diese Produkte sind in warmem oder kaltem Wasser dispergierbar und können durch einfaches mechanisches Einarbeiten, z.B. Rühren, in Getränke eingebracht werden. Dabei wird zunächst eine gleichmäßige Verteilung erreicht, bei längerem Stehen kommt es jedoch, insbesondere bei gleichzeitiger Anwesenheit höherer Mengen an Vitamin E und β-Carotin, zu Phasentrennungen und Aufrahmungen. Durch kurzes Aufschütteln eines solchen flüssigen Nahrungsmittels ist keine erneute gleichmäßige Verteilung der abgeschiedenen, supplementierten Nährstoffe im Getränk herbeizuführen.

Der Verbraucher sollte sich jedoch darauf verlassen können, daß er durch den Verzehr einer bestimmten Portion des angereicherten flüssigen Nahrungsmittels, z.B. eines Getränks immer eine konstante, aus den Herstellerangaben berechenbare Menge der im Getränk enthaltenen Nährstoffe aufnimmt. Ist das Getränk in ein Behältnis abgefüllt, das mehr als eine Verzehrportion enthält, muß der Verbraucher ebenso davor geschützt werden, daß er nicht mit den ersten oder den letzten Verzehrportionen überproportional große Mengen dieser Nährstoffe aufnimmt bzw. dem restlichen Getränk entzieht. Dies könnte zu einer Überdosierung führen, die möglicherweise weder aus sensorischen noch aus ernährungsphysiologischen Gründen wünschenswert wäre. Außerdem würde das verbleibende Getränk aus ernährungsphysiologischer Sicht erheblich an Wert verlieren. Ein solches in- stabiles, zur Inhomogenität neigendes Getränk könnte daher nur in kleine Portionsgebinde abgefüllt werden, die der Verbraucher durch einmaligen Verzehr leeren müßte.

Derartige Kleingebinde sind jedoch oft nur für bestimmte Verwendungsanläße wünschenswert.

Die europäische Patentanmeldung 0 397 232 beschreibt mit Vitaminen der A-Gruppe, bevorzugt in Form des verkapselten β-Carotins, Vitamin C, Riboflavin und den Mineralstoffen Calcium und Eisen angereicherte Getränke. Bei dem darin beschriebenen verkapselten β-Carotin handelt es sich um die üblicherweise angebotenen Handelsformen. Das β-Carotin wird nach üblichen in der Fruchtsaftindustrie bekannten Verfahren eingebracht und die Getränke werden in undurchsichtige Gebinde gefüllt. Auf die bei der Lagerung entstehenden Entmischungen bzw. Aufrahmungen des β-Carotins wird nicht näher eingegangen.

Die deutsche Patentanmeldung 38 27 957 beschreibt ein Verfahren zum Einbringen und Verteilen von einer oder mehrerer lipophiler Substanzen in flüssige Nahrungs- oder Genußmittel auf wäßriger Basis. Als lipophile Stoffe kommen u.a. auch die lipophilen Vitamine A und E in Frage. Die lipophile Substanz wird erfindungsgemäß auf einen festen, wasserunlöslichen Träger, wie Frucht- oder Gemüsezellen, Pulpen, Trester, Treber, Weizenkleie u.ä. vorzugsweise durch Aufsprühen aufgebracht. Diese so behandelten Träger können dann zur Anreicherung von Nahrungsmitteln auf wäßriger Basis zugesetzt werden, wodurch eine homogene Verteilung der lipophilen Nährstoffe erreicht wird.

Die US-Anmeldung 5,002,779 beschreibt in erster Linie mit Vitamin C und Eisen angereicherte Getränkepulver. Weitere Vitamine, wie die Vitamine A, B, D, E und verkapseltes β-Carotin sowie weitere Mineralstoffe, wie Calcium, Zink und Kupfer können auch enthalten sein. Diese trockenen Getränkemixturen sollen bis zu einem Jahr lagerstabil sein.

Die deutsche Offenlegungsschrift DE-OS 28 22 324 beschreibt ein Vitamin E-Trockenpulver, welches ein Eiweißkolloid und ein Disaccharid enthält. Das Pulver wird hergestellt, in dem der Vitamin E-ester in einer an Erdalkaliionen armen und an Lactose reichen Restflüssigkeit der Milchzuckergewinnung unter Zugabe von Caseinat dispergiert und die gewonnene Dispersion dann sprühgetrocknet wird. Diese Pulver können Futter- oder Nahrungsmitteln zugesetzt werden.

Die EP-0 106 100 beschreibt eine wäßrige Zubereitung, die Vitamin E enthält. Vitamin E wird in der wäßrigen Phase zusammen mit einem Saponin, wie beispielsweise Quillajasaponin, gelöst. Solche Zubereitungen können in den Bereichen Medizin, Kosmetik, Nahrungsmittel und dergleichen Verwendung finden.

Die EP 0 484 486 beschreibt Getränke, die mit β-Carotin, Vitamin C und E sowie Fischöl angereichert sind und eine vorbeugende Wirkung gegen Krebs und Kreislaufkrankheiten aufweisen sollen. Das Fischöl wird in Form eines trockenen Pulvers zugesetzt.

Die US 5,232,726 beschreibt ein Verfahren zur mikrobiologischen Haltbarmachung von Citrussäften, wobei anstelle der üblicherweise angewandten Pateurisation die Haltbarmachung durch Homogenisation unter Anwendung sehr hoher Drücke (> 15,000 psi entsprchend > 1.050 bar) erfolgt.

Die danach hergestellten Produkte sollen bei niedrigen Lagertemperaturen ca. 40 Tage mikrobiologisch stabil bleiben, während das Wesentliche der vorliegenden Erfindung darin besteht, daß die Produkte über einen Zeitraum von ca. 12 Monaten bei Raumtemperatur nicht nur (was selbstverständlich ist) mikrobiologisch sondern vor allem physikalisch stabil sind.

Aufgabe der vorliegenden Erfindung ist die Bereitstellung gutschmeckender, die antioxidativ wirksamen Vitamine C, E und Provitamin A enthaltender sowie gegebenenfalls mit Vitaminen der B-Gruppe, Mengen- und Spurenelementen, Bioflavonoiden, Carotinoiden, essentiellen Fettsäuren, Ballaststoffen und/oder Selen angereicherter flüssiger Nahrungsmittel zu entwickeln, die trotz eines hohen Anteils an fettlöslichen Vitaminen über eine gute physikalische Stabilität verfügen, so daß über ihre gesamte Lagerdauer von üblicherweise ca. 12 Monaten bei Raumtemperatur eine homogene Verteilung der Nährstoffe gewährleistet bleibt und es nicht zu einer unerwünschten "Aufrahmung" kommt.

Die Notwendigkeit einer erhöhten Zufuhr der antioxidativen Vitamine C und E und des Provitamins β-Carotin wurde bereits beschrieben. Positive Interaktionen solcher Nährstoffzusammenstellungen wie etwa zwischen den Vitaminen C und E oder sogar synergistische Beziehungen zwischen Vitamin E und Selen bezüglich der Stimulation einer Antikörperbildung sind bekannt (Elmadfa, I. et al.: Vitamin E; wiss. Verlagsges.mbH Stuttgart 1985).

Die Verwendung von Zusatzstoffen wie Emulgatoren und Sequestriermitteln zur Vermeidung von Entmischungen sind in hochwertigen Fruchtgetränken nicht wünschenswert oder ggf. in Deutschland lebensmittelrechtlich nicht zulässig, wie z.B. der in der europäischen Patentschrift 0 106 100 beschriebene Saponinzusatz.

Bei herkömmlichen Getränken mit anfänglich homogener Verteilung und Dispersion der lipophilen Substanzen im Getränk zeigte es sich, daß sich im Verlauf der Lagerung an der Oberfläche ein sich zunehmend stärker ausgeprägter "Ring" entwickelt. Dieser "Ring" wird, wie in Versuchen nachgewiesen werden konnte, ursächlich durch Vitamin E verursacht und bildet sich insbesondere dann, wenn Vitamin E-Gehalte > 120 mg/l vorliegen. Bei gleichzeitiger Anwesenheit von β-Carotin verstärkt der durch Vitamin E verursachte weiche und kaum sichtbare Ring im Verlauf der Lagerung auch das Aufsteigen und Abscheiden von β-Carotin, was zu einer intensiven Orangefärbung und zunehmenden Verhärtung führt. Auch bei kräftigem Schütteln läßt sich dieser Ring kaum oder gar nicht mehr gleichmäßig verteilen. Derartige Getränke werden aus optischen Gründen von vielen Verbrauchern abgelehnt. Darüber hinaus wird beim Konsum eines solchen Getränks mit der zuerst entnommenen Portion eine überproportional hohe Dosis dieser antioxidativen Vitamine aufgenommen, während diese Mengen bei den restlichen Portionen fehlen.

Es wurde jetzt festgestellt, daß sich die Aufgabe überraschend dadurch lösen läßt, daß die Einzelkomponenten und/oder das Gemisch durch Hochdruck homogenisiert werden und dabei vor und/ oder nach der Homogenisierung durch Unterdruck entgast wird. Vorzugsweise wird zweistufig homogenisiert, und zwar in der ersten Stufe mit 200 bis 400 bar und in der zweiten Stufe mit 20 bis 40 bar.

Das erfindungsgemäße Verfahren wird vorzugsweise durchgeführt gemäß anliegendem Fließschema.

Die Herstellung erfolgt somit vorzugsweise in der Weise, daß eine Dispersion der Vitamine C und E und des Provitamins A in entgastem Wasser von ca. 40 bis 50°C hergestellt wird. Das Vitamin E und β-Carotin liegen vorzugsweise in Gelatineverkapselter Form vor. Diese Mischung wird im Anschluß in den Ausmischtank I gepumpt.

Parallel werden alle in tiefgefrorener Form vorliegenden tiefgekühlten Fruchtsäfte, Fruchtsaftkonzentrate und Fruchtmarks angetaut, über einen Eis-Crusher zerkleinert und ebenfalls in den Ausmischtank I überführt. Vorzugsweise werden ca. 5 bis 10 % des Fruchtgehaltes in Form von Fruchtmark zugesetzt.

Der im Ausmischtank I vorliegenden Frucht-/Vitaminmischung werden gegebenenfalls weitere nicht in gefrorener Form zum Einsatz kommende Fruchtkomponenten, Süßungsmittel, wie z.B. Saccharose, Fructose, Invertzucker, Honig, künstliche Süßstoffe, z.B. Aspartam, Saccharin, Cyclamat, Acesulfam K usw.), weitere essentielle und/oder funktionsfördernde Nährstoffe sowie ggf. eine Teilmenge entgastes Wasser zugesetzt.

Durch den Einsatz von Leitstrahlmischern wird gewährleistet, daß ein unerwünschter Lufteinschlag bei der Herstellung dieser Mischung vermieden wird. Da auch bei sorgfältiger Arbeitsweise ein, wenn auch geringer, Lufteinschlag unvermeidlich ist, muß gegebenenfalls im Anschluß eine Entlüftung vorgenommen werden. Dazu wird die Mischung in einem Doppelrohrwärmeaustauscher auf 55 bis 60°C erwärmt und etwas unterhalb des Siedepunktes in einem Vakuumentgaser entlüftet. Um die bei der Entgasung entweichenden Aromastoffe zu kondensieren, ist der Vakuumpumpe eine zweistufige, frischwasser- und kältebeaufschlagte Kondensationseinrichtung vorgeschaltet. Das zurückgewonnene aromatische Konzentrat wird nach dem Injektorprinzip kontinuierlich wieder in den Produktstrom eingespeist.

Das entgaste Produkt wird im Anschluß homogenisiert und in den Ausmischtank II gefördert. Die Homogenisation erfolgt zweistufig mittels eines Hochdruckkolbenhomogenisators, wobei die erste Stufe mit einem Druck von mindestens 200 bar, vorzugsweise 400 bar, und zur Kavitationsverstärkung die zweite Homogenisierstufe mit einem Druck von ca. 10 % der ersten Stufe gefahren wird. Der Vordruck, d.h. die Produktzuführung zum Homogenisator, beträgt 4 bis 5 bar. Die Homogenisation wird vorzugsweise bei Temperaturen von 50 bis 60°C durchgeführt.

Die auf diese Weise hergestellte konzentrierte Mischung kann entweder direkt in den Ausmischtank II überführt und sofort weiterverarbeitet werden oder nach Rückkühlung auf Temperaturen < 5°C bis zur Weiterverarbeitung einige Tage zwischengelagert werden. Bei direkter Weiterverarbeitung kann die Mischung entweder unmittelbar in konzentrierter Form pasteurisiert und als Konzentrat bzw. Sirup in geeignete Behältnisse abgefüllt werden oder zuvor durch Zusatz von Wasser in ein trinkfertiges Produkt überführt, pasteurisiert und dann abgefüllt werden.

Soll die Abfüllung unmittelbar in konzentrierter Form erfolgen, wird die Mischung in der Pasteurisationsanlage auf ca. 85 °C erhitzt, nach einer Heißhaltezeit von ca. 10 bis 30 sec. in geeignete Behältnisse abgefüllt und im Rüdkkühler unter kontrollierten Bedingungen auf ca. 20 bis 30 °C abgekühlt.

Soll das Produkt vor der Abfüllung mit Wasser auf Trinkstärke verdünnt werden, muß die Mischung zuvor auf Temperaturen > 20 °C abgekühlt werden, falls die vorangegangene Homogenisation bei Temperaturen von 50 bis 60 °C erfolgte. Danach wird im Ausmischtank II die zur Herstellung des Fertiggetränkes erforderliche fehlende Wassermenge zugesetzt. Im Falle der Mitverwendung von Fruchtsaftkonzentraten werden an dieser Stelle auch die bei der Konzentrierung abgetrennten, anteiligen Mengen an Fruchtsaftaromen zugesetzt. Das Wasser wird zuvor entgast und bei der anschließenden Herstellung der homogenen Mischung ist durch den Einsatz von Leitstrahlmischern dafür Sorge zu tragen, daß ein erneuter Lufteinschlag vermieden wird.

Aus dem Ausmischtank II wird das Produkt dann mittels einer Kreiselpumpe in das Vorlaufgefäß einer Pasteurisationsanlage gefördert. Um eine denkbare Entmischung im Vorlaufgefäß auszuschließen, wird das Produkt mit einem weiteren Leitstrahlmischer in Bewegung gehalten. Durch die Niveausteuerung des Mischers in Verbindung mit der Produktfüllstandregelung wird ein Lufteinschlag ausgeschlossen. Das Getränk wird in der Pasteurisationsanlage, produktabhängig, auf ca. 90°C erhitzt. Nach einer Heißhaltezeit von ca. 10 bis 30 sec. wird entweder auf 15 bis 20°C zurückgekühlt und kaltaseptisch in Kartonverpackungen oder Glasflaschen abgefüllt oder heiß in Flaschen gefüllt und im Rückkühler unter kontrollierten Bedingungen auf ca. 20°C zurückgekühlt.

Erfolgt die Weiterverarbeitung der konzentrierten Mischung nicht unmittelbar im Anschluß an die Homogenisation, sondern erst nach einer wie oben beschriebenen Zwischenlagerung, wird vor der Abfüllung vorzugsweise eine weitere Entgasung vorgenommen. Dazu wird das Produkt mittels einer Kreiselpumpe in das Vorlaufgefäß einer Pasteurisationsanlage gefördert, auf 55 bis 60°C erwärmt und in einem Vakuum-Entgaser etwas unterhalb des Siedepunktes entlüftet. Um die bei der Entgasung entweichenden Aromastoffe zu kondensieren, ist der Vakuumpumpe, wie bereits beschrieben, eine zweistufige, frischwasser- und kältemittelbeaufschlagte Kondensationseinrichtung vorgeschaltet. Das zurückgewonnene aromatische Kondensat wird nach dem Injektorprinzip kontinuierlich wieder in den Produktstrom eingespeist. Das entgaste Produkt wird im Anschluß zur Abfülleinrichtung gefördert, pasteurisiert und wie oben beschrieben abgefüllt.

Durch das Zusammenwirken der beschriebenen Verfahrensschritte werden flüssige Nachrungsmittel erhalten, die auch bei deutlich verlängerter Lagerzeit keine Aufrahmung der lipophilen Substanzen und Ringbildung aufwiesen.

An den folgenden Beispielen soll die Erfindung näher erläutert werden:

### Beispiel 1

Zur Herstellung von 10.000 l eines mit den Vitaminen E, C und Provitamin A angereicherten Fruchtgetränkes werden 700 kg tiefgefrorenes Fruchtmark bestehend aus einer Mischung von Bananen-, Guaven-, Papaya- und Pfirsichmark, 1.093 kg Orangensaftkonzentrat und 233 kg Ananassaftkonzentrat vorsichtig angetaut, in einem Eis-Crusher zerkleinert, mit 100 l entgastem Wasser (Restsauerstoffgehalt: < 0,2 mg/l) in den Ausmischtank I gepumpt und mit 394 kg Apfelsaftkonzentrat sowie weiteren 1.700 l entgastem Wasser mit einem Restsauerstoffgehalt von < 0,2 mg/l vereinigt.

In einem weiteren Tank werden 100 l entgastes Wasser von 40°C vorgelegt und nacheinander 8,94 kg mikroverkapseltes, 50 %iges all-rac-α-Tocopherylacetat, 9,12 kg Vitamin C und 3 kg mikroverkapseltes 10 %iges β-Carotin zugegeben und bis zur vollständigen Verteilung gerührt. Die Dispersion wird im Anschluß zu den übrigen Bestandteilen im Ausmischtank I gepumpt (s. Fließschema) und bis zur vollständigen Durchmischung gerührt. Das Getränk wird dann in einem Doppelrohrwärmeaustauscher auf 60°C erhitzt und wie bereits beschrieben in einem Vakuum-Entgaser bei 130 mbar entgast. Das auf einen Restsauerstoffgehalt von < 0,5 mg/l entgaste Produkt wird dann im Anschluß mittels Hochdruckkolbenhomogenisators bei Drücken von 400 bar (1. Stufe) und 40 bar (2. Stufe) homogenisiert. Dieser Premix wird dann auf Temperaturen < 5°C zurückgekühlt und kann bis zur weiteren Verwendung bei Temperaturen von < 5°C gelagert oder unmittelbar weiterverarbeitet werden.

Zur Fertigstellung des Getränkes wird die noch fehlende Menge von 6.236 l entgastem Wasser (Restsauerstoffgehalt: < 0,2 mg/l) sowie 40 l Orangen-Waterphase und 23,6 l Apfelsaftaroma zugesetzt und bis zum Vorliegen einer homogenen Mischung gerührt, wobei durch die Verwendung von Leitstrahlmischern ein erneuter Lufteinschlag vermieden werden muß. Im Anschluß wird das Produkt in einen Doppelrohrwärmeaustauscher gepumpt, 30 sec. bei 89°C pasteurisiert und mittels eines sogenannten Niedrig-Vakuumfüllers heiß in farblose 0,75 l Flaschen gefüllt und mit einem abblasenden Anrollverschluß verschlossen. Das abgefüllte Getränk wird im Anschluß über einen Rückkühler auf 22 bis 25°C abgekühlt.

### Beispiel 2

In einem weiteren Versuch wird ein Getränk nach der in Beispiel 1 beschriebenen Rezeptur hergestellt, wobei die Homogenisation bei 20°C und 200 bar (Stufe 1) bzw. 20 bar (Stufe 2) erfolgen. Die übrigen Parameter bleiben unverändert.

### Beispiel 3

In einem weiteren Versuch wird ein Getränk nach der in Beispiel 1 beschriebenen Rezeptur hergestellt, wobei lediglich eine einstufige Homogenisation bei 20°C und 200 bar durchgeführt wird. Die übrigen Parameter bleiben unverändert.

### Beispiel 4

Der Versuch gemäß Beispiel 3 wird wiederholt, wobei auf Entgasung und Homogenisation verzichtet wird.

### Beispiel 5

In einem weiteren Versuch werden zur Herstellung von 10.000 Litern eines kalorienreduzierten Fruchtgetränks 3.000 kg Fruchtmark bestehend aus einer Mischung von Aprikosen-, Pfirsich- und Mangomark mit 200 l entgastem Wasser nach dem skizzierten Herstellungsablauf über einen Eis-Crusher in den Ausmischtank I (siehe Fließschema) gepumpt und mit je 166 kg Apfelsaftkonzentrat und Birnensaftkonzentrat sowie 1.500 l entgastem Wasser gemischt.

In einem Vorlagetank werden 500 l entgastes Wasser von 55°C vorgelegt und nacheinander 2,25 kg Vitamin C, 7,45 kg mikroverkapseltes, 50 %iges all-rac-α-Tocopherylacetat, 20 kg selenhaltige Bierhefe (Selengehalt 6,25 mg/100 g) und 4,5 kg mikroverkapseltes, 10 %iges β-Carotin zugegeben und bis zur vollständigen Verteilung gerührt. Die Dispersion wird im Anschluß mit den übrigen Bestandteilen im Ausmischtank I vereinigt.

Diese Mischung wird mittels Doppelrohlwärmeaustauscher auf 60°C erhitzt und im Vakuumentgaser bei 130 mbar entgast. Im Anschluß erfolgt die zweistufige Homogenisation mittels Hochdruckkolbenhomogenisators (1. Stufe 350 bar, 2. Stufe 35 bar). Das Homogenisat wird dann mittels Doppelrohrwärmeaustauschers auf ca. 20°C zurückgekühlt und im Ausmischtank II nach Zugabe der noch fehlenden Wassermenge von 4.934 l sowie den anteiligen Mengen an Apfel- und Birnenaroma bis zur vollständigen Durchmischung gerührt. Pasteurisation und Abfüllung erfolgen wie bei Beispiel 1 beschrieben.

### Beispiel 6

Nach der in Beispiel 5 beschriebenen Rezeptur wird ein Getränk hergestellt, bei dem jedoch die Homogenisation bei 20°C und 200 bar/20 bar (1. Stufe/2. Stufe) erfolgen. Alle übrigen Bedingungen bleiben unverändert.

### Beispiel 7

Nach der in Beispiel 5 beschriebenen Rezeptur wird ein Getränk hergestellt, bei dem jedoch eine einstufige Homogenisation bei 60°C und 200 bar erfolgt. Die übrige Herstellung erfolgt wie im Beispiel 5 beschrieben.

### Beispiel 8

Der Versuch nach Beispiel 7 wird wiederholt, wobei die Homogenisation bei 20°C und 200 bar erfolgt.

### Beispiel 9

In einem weiteren Versuch wird ebenfalls ein Getränk nach der in Beispiel 5 beschriebenen Rezeptur hergestellt. Die Gesamtmenge von 10.000 Litern wird in zwei Ansätze von jeweils 5.000 Liter geteilt. Einer der beiden mit 9 a) bezeichneten Ansätze wird wie im Beispiel 5 beschrieben auf 60°C erhitzt, im Vakuumentgaser bei 130 mbar entgast und unter Umgehung der Hochdruckhomogenisation, wie im Beispiel 5 beschrieben, fertiggestellt. Der mit 9 b) bezeichnete zweite Ansatz wird ohne vorherige Entgasung und Homogenisation nach Zugabe der noch fehlenden Wassermenge und der anteiligen Aromen, wie in Beispiel 5 beschrieben, fertiggestellt.

### Beispiel 10

800 kg Zucker werden in einem Tank in 157 l entgastem Wasser von 70 °C gelöst. Dieser Lösung werden im anschluß 265 kg Apfelmark beigemischt. In einem weiteren Tank werden 100 l entgastes Wasser von 50 °C vorgelegt und nacheinander 4,68 kg Vitamin C, 1,79 kg 50 %iges all-rac-alpha-Tocopherylacetat und 2,88 kg mikroverkapseltes 10 %iges β-Carotin zugegeben und bis zur vollständigen Verteilung gerührt. Beide Mischungen werden danach vereinigt und wie in Beispiel 1 beschrieben im Doppelrohrwärmeaustauscher auf 60 °C erhitzt, entgast und homogenisiert. Im Anschluß wird das Produkt erneut im Doppelrohrwärmeaustauscher auf ca. 85 °C erhitzt, heiß in 0,5 l Weithalsglasflaschen abgefüllt und in einem Rückkühler auf ca. 30 °C abgekühlt.

Zur Ermittlung der physikalischen Stabilität wurden die in den Beispielen 1 bis 10 beschriebenen, in farblose Glasflaschen abgefüllten Getränke einem Lagertest unterzogen.

Dazu wurden die Produkte in klimatisierten Räumen jeweils bei 4°C, 20°C und 37°C gelagert und im Abstand von 4 Wochen über einen Zeitraum von insgesamt 12 Monaten beobachtet.

Das Ergebnis ist in der folgenden Tabelle zusammengefaßt:

| Getränk °C nach | | Beispiel 1 | | | Beispiel 2 | | | Beispiel 3 | | | Beispiel 4 | | |
|---|---|---|---|---|---|---|---|---|---|---|---|---|---|
| | | 4 | 20 | 37 | 4 | 20 | 37 | 4 | 20 | 37 | 4 | 20 | 37 |
| 1 | Monat | - | - | - | - | - | - | - | - | - | - | - | - |
| 2 | Monaten | - | - | - | - | - | - | - | - | - | - | - | + |
| 3 | Monaten | - | - | - | - | - | - | - | - | - | - | + | ++ |
| 4 | Monaten | - | - | - | - | - | - | - | - | - | + | + | ++ |
| 5 | Monaten | - | - | - | - | - | - | - | - | - | + | ++ | ++ |
| 6 | Monaten | - | - | - | - | - | + | - | - | + | + | ++ | +++ |
| 7 | Monaten | - | - | - | - | - | + | - | - | + | + | ++ | +++ |
| 8 | Monaten | - | - | - | - | - | + | - | - | ++ | ++ | +++ | +++ |
| 9 | Monaten | - | - | + | - | - | + | - | + | ++ | ++ | +++ | +++ |
| 10 | Monaten | - | - | + | - | - | ++ | - | + | ++ | +++ | +++ | +++ |
| 11 | Monaten | - | - | + | - | - | ++ | - | ++ | ++ | +++ | +++ | +++ |
| 12 | Monaten | - | - | ++ | + | + | ++ | - | ++ | +++ | +++ | +++ | +++ |
| - unverändert + leicht sichtbare Ringbildung ++ sichtbare, aber gut aufschüttelbare Ringbildung +++ deutlich sichtbare, schwer aufschüttelbare Ringbildung | | | | | | | | | | | | | |

| Getränk °C nach | | Beispiel 5 | | | Beispiel 6 | | | Beispiel 7 | | | Beispiel 8 | | |
|---|---|---|---|---|---|---|---|---|---|---|---|---|---|
| | | 4 | 20 | 37 | 4 | 20 | 37 | 4 | 20 | 37 | 4 | 20 | 37 |
| 1 | Monat | - | - | - | - | - | - | - | - | - | - | - | - |
| 2 | Monaten | - | - | - | - | - | - | - | - | - | - | - | - |
| 3 | Monaten | - | - | - | - | - | - | - | - | - | - | - | - |
| 4 | Monaten | - | - | - | - | - | - | - | - | - | - | - | - |
| 5 | Monaten | - | - | - | - | - | - | - | - | - | - | - | - |
| 6 | Monaten | - | - | - | - | - | - | - | - | - | - | - | + |
| 7 | Monaten | - | - | - | - | - | - | - | - | + | - | - | ++ |
| 8 | Monaten | - | - | - | - | - | - | - | - | ++ | - | - | ++ |
| 9 | Monaten | - | - | + | - | - | + | - | - | ++ | - | - | ++ |
| 10 | Monaten | - | - | + | - | - | + | - | - | ++ | - | - | +++ |
| 11 | Monaten | - | - | ++ | - | - | ++ | - | + | +++ | - | + | +++ |
| 12 | Monaten | - | - | ++ | - | + | ++ | - | + | +++ | - | + | +++ |
| - unverändert + leicht sichtbare Ringbildung ++ sichtbare, aber gut aufschüttelbare Ringbildung +++ deutlich sichtbare, schwer aufschüttelbare Ringbildung | | | | | | | | | | | | | |

| Getränk °C nach | | Beispiel 9a | | | Beispiel 9b | | | Beispiel 10 | | |
|---|---|---|---|---|---|---|---|---|---|---|
| | | 4 | 20 | 37 | 4 | 20 | 37 | 4 | 20 | 37 |
| 1 | Monat | - | - | - | - | - | - | - | - | - |
| 2 | Monaten | - | - | - | - | - | + | - | - | - |
| 3 | Monaten | - | - | + | + | + | ++ | - | - | - |
| 4 | Monaten | - | - | ++ | + | + | ++ | - | - | - |
| 5 | Monaten | - | - | ++ | + | ++ | +++ | - | - | - |
| 6 | Monaten | - | - | +++ | + | ++ | +++ | - | - | - |
| 7 | Monaten | - | + | +++ | ++ | +++ | +++ | - | - | - |
| 8 | Monaten | - | + | +++ | ++ | +++ | +++ | - | - | - |
| 9 | Monaten | - | + | +++ | +++ | +++ | +++ | - | - | + |
| 10 | Monaten | + | ++ | +++ | +++ | +++ | +++ | - | - | + |
| 11 | Monaten | + | ++ | +++ | +++ | +++ | +++ | - | - | + |
| 12 | Monaten | + | +++ | +++ | +++ | +++ | +++ | - | + | ++ |
| - unverändert + leicht sichtbare Ringbildung ++ sichtbare, aber gut aufschüttelbare Ringbildung +++ deutlich sichtbare, schwer aufschüttelbare Ringbildung | | | | | | | | | | |

Es wurden keine Unterschiede im Stabilitätsverhalten zwischen den in den Beispielen 1 bis 4 beschriebenen Getränken festgestellt, wenn diese unmittelbar ausgemischt und abgefüllt wurden bzw. wenn der homogenisierte Premix bei Temperaturen < 5°C zwischengelagert wurde und die Fertigstellung und Abfüllung nach 3 Tagen erfolgte.

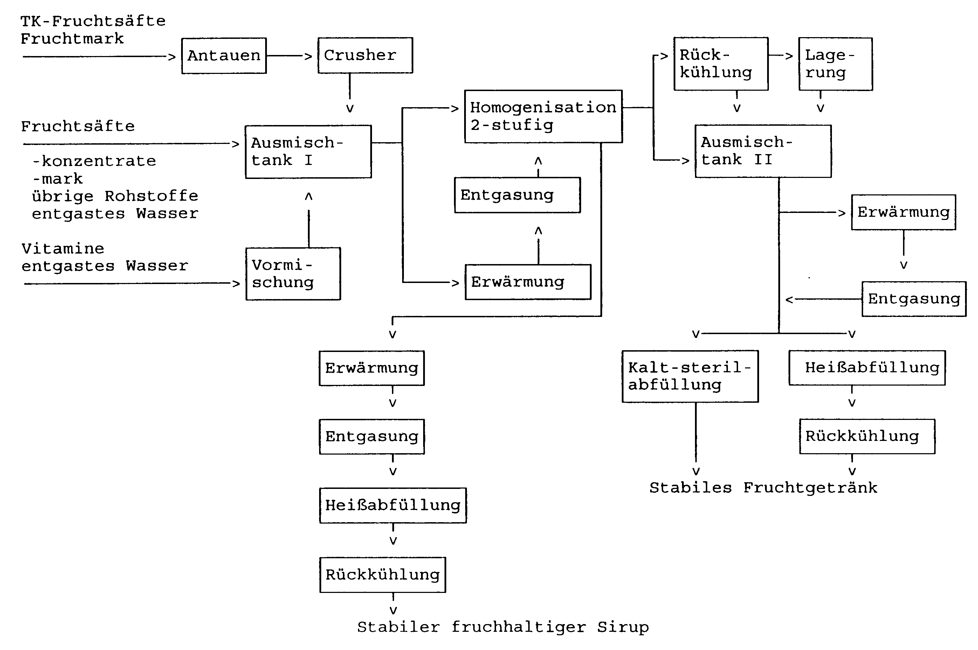

## Patentansprüche

1. Lagerstabile mit antioxidativ wirksamen Nährstoffen und Vitaminen angereicherte flüssige Nahrungsmittel, enthaltend zugesetzte Mengen an Provitamin A, und/oder Vitamin A, C und E sowie gegebenenfalls Vitamine der B-Gruppe, Mengen- und Spurenelemente, Bioflavonoide, Carotinoide, essentielle Fettsäuren, Ballaststoffe und/oder Selen, dadurch gekennzeichnet, daß die Getränke unter Hochdruck homogenisiert sind, wobei sie vor und/oder nach der Homogenisierung entgast wurden.

2. Verfahren zur Herstellung von lagerstabilen Getränke enthaltend zugesetzte Mengen an Provitamin A, und/oder Vitamin A, C und E sowie gegebenenfalls Vitamine der B-Gruppe, Mengen- und Spurenelemente, Bioflavonoide, Carotinoide, essentielle Fettsäuren, Ballaststoffe und/oder Selen, dadurch gekennzeichnet, daß die Einzelkomponenten und/oder das Gemisch unter Hochdruck homogenisiert werden und dabei vor und/oder nach der Homogenisierung durch Unterdruck entgast werden.

3. Verfahren gemäß Anspruch 2, dadurch gekennzeichnet, daß zweistufig homogenisiert wird, und zwar in der ersten Stufe mit 200 bis 400 bar und in der zweiten Stufe bei 20 bis 40 bar.

## Claims

1. Liquid foods having a long shelf life and being supplemented with antioxidatively active nutrients and vitamins, containing added amounts of provitamin A and/or vitamins A, C and E, and optionally vitamins of the B group, macronutrients and micronutrients (trace elements), bioflavonoids, carotinoids, essential fatty acids, bulks and/or selenium, characterized in that the drinks have been homogenized under high pressure and degassed before and/or after being homogenized.

2. A process for the preparation of beverages having a long shelf life and containing added amounts of provitamin A and/or vitamins A, C and E, and optionally vitamins of the B group, macronutrients and micronutrients, bioflavonoids, carotinoids, essential fatty acids, bulks and/or selenium, characterized in that the individual components and/or the mixture are homogenized under high pressure and degassed by reduced pressure before and/or after being homogenized.

3. The process according to claim 2, characterized in that the homogenization is performed in two steps, namely at 200 to 400 bar in the first step and at 20 to 40 bar in the second step.

## Revendications

1. Produit alimentaire liquide, stable au stockage, enrichi en nutriments à effet anti-oxydant et en vitamines, contenant des quantités ajoutées de provitamine A et/ou de vitamine A, C et E, et éventuellement des vitamines du groupe B, des éléments en quantité et des oligo-éléments, des bioflavonoïdes, des caroténoïdes, des acides gras essentiels, des substances à effet de charge et/ou de sélénium, caractérisé en ce que les boissons sont homogénéisées sous haute pression, avec un dégazage avant et/ou après l'homogénéisation.

2. Procédé de fabrication de boissons stables avec stockage, contenant des quantités ajoutées de provitamine A et/ou de vitamine A, C et E, et éventuellement des vitamines du groupe B, des éléments en quantité et des oligo-éléments, des bioflavonoïdes, des caroténoïdes, des acides gras essentiels, des substances à effet de charge et/ou du sélénium, caractérisé en ce que les différents constituants et/ou le mélanges sont homogénéisés sous haute pression, avec un dégazage sous l'effet d'une dépression, avant et/ou après l'homogénéisation.

3. Procédé selon la revendication 2, caractérisé en ce que l'homogénéisation est effectuée en deux étapes, et plus précisément dans la première étape sous une pression de 200 à 400 bars et dans la deuxième étape sous une pression de 20 à, 40 bars.
